## Europäisches Patentamt

## European Patent Office

## Office européen des brevets

(19)

(11) Veröffentlichungsnummer : **0 221 972**
**B1**

(12) **EUROPÄISCHE PATENTSCHRIFT**

(45) Veröffentlichungstag der Patentschrift :
**28.03.90**

(21) Anmeldenummer : **86903316.7**

(22) Anmeldetag : **10.05.86**

(86) Internationale Anmeldenummer :
**PCT/EP 86/00273**

(87) Internationale Veröffentlichungsnummer :
**WO/86069 (20.11.86 Gazettee 86/25)**

(51) Int. Cl.$^5$ : **H 05 B 41/29, H 02 H 7/122**

(54) SCHUTZSCHALTUNG FÜR EINE WECHSELRICHTERSCHALTUNG.

(30) Priorität : **14.05.85 AT 1452/85**

(43) Veröffentlichungstag der Anmeldung :
**20.05.87 Patentblatt 87/21**

(45) Bekanntmachung des Hinweises auf die Patenterteilung : **28.03.90 Patentblatt 90/13**

(84) Benannte Vertragsstaaten :
**BE CH DE FR GB IT LI LU NL SE**

(56) Entgegenhaltungen :
**EP—A— 0 062 275**
**WO—A—81 /031 02**
**WO—A—82 /012 76**
**WO—A—83 /005 87**
**US—A— 3 967 159**

(73) Patentinhaber : **Zumtobel Aktiengesellschaft**
**Höchster Strasse 8**
**A-6850 Dornbirn (AT)**

(72) Erfinder : **WIESNER, Ernst**
**Sägerstrasse 7a**
**A-6850 Dornbirn (AT)**
Erfinder : **JAGSCHITZ, Otto**
**Pfarrer-Knecht-Strasse 20**
**A-6840 Götzis (AT)**

(74) Vertreter : **Hefel, Herbert, Dipl.-Ing.**
**Egelseestrasse 65a Postfach 61**
**A-6800 Feldkirch (AT)**

**Beschreibung**

Die Erfindung bezieht sich auf eine Wechselrichterschaltung zum Betrieb von Gasentladungslampen mit Hochfrequenz nach den Merkmalen des Oberbegriffes des Patentanspruches 1.

Es ist bekannt, Gasentladungslampen mit hochfrequenter Spannung, beispielsweise 20 kHz oder mehr zu betreiben. Durch den Betrieb von Gasentladungslampen mit Spannungen hoher Frequenz kann die Lichtausbeute einer solchen Lampe erhöht werden und auch die Bauelement für den Betrieb der Lampe haben in diesem Fall geringere Verlustleistungen und können daher kleiner gebaut werden als solche, die für den Betrieb von Leuchtstofflampen mit herkömmlicher Netzfrequenz dienen. Um die für das Starten der Gasentladungslampen notwendigen hohen Spannungen zu erhalten, sind in den vorerwähnten Schaltungen Serienschwingkreise den Gasentladungslampen zugeordnet, welche .außerordentlich rasch die Spannung ansteigen lassen, bis die Gasentladungslampe startet. Es können dazu Gasentladungslampen mit vorgeheizten Elektroden oder auch solche mit nicht vorgeheizten Elektroden verwendet werden. Startet die Lampe aus irgendwelchen Gründen trotz Erreichen der Startspannung nicht, so steigt hier die Spannung auf Werte an, die die Schaltung gefährden können. Ein Fehler, der das Starten der Gasentladungslampe verhindert, kann beispielsweise darin liegen, daß die Lampe undicht ist, also einen sogenannten Gasdefekt aufweist. Unter Gasdefekt wird hier und im folgenden ein solcher Defekt verstanden, durch welchen die Gasverhältnisse im Glaskolben der Gasentladungslampe in irgendeiner Form gestört sind. Diese Gasdefekte können verschiedenste Ursachen haben. Anstelle solcher Gasdefekte kann eine Gasentladungslampe auch andere Mängel aufweisen, beispielsweise kann die Emissionsfähigkeit der Elektroden erschöpft sein, so daß die Gasentladungslampe nicht mehr zünden kann.

Eine Schutzschaltung dieser Art ist auch in der deutschen Patentschrift 30 14 419 beschrieben und gezeigt. Diese Schutzschaltung ist hier bei einem Vorschaltgerät für eine Gasentladungslampe vorgeschen, die parallel zum Kondensator eines Reihenresonanzkreises im Lastkreis eines Wechselrichters angeordnet ist, dessen Schalter abhängig von den Spannungen an Sekundärwicklungen eines Transformators gesteuert werden, der mit seiner Primärwicklung ebenfalls im Lastkreis liegt. Diese Schutzschaltung weist ferner eine bistabile Schalteinrichtung auf, die über ein RC-Glied abhängig von dem Strom im Lastkreis des Wechselrichters angesteuert wird und bei einem Grenzwert des Stromes im Lastkreis ihre Eingangsspannung in den Abschaltzustand kippt und dadurch einen Kurzschluß einer Sekundärwicklung des Transformators bewirkt. Diese Schaltung arbeitet abhängig vom Strom im Lastkreis, darüberhinaus wird hier der Wechselrichter im Störfalle vollständig abgeschaltet.

Eine solche Schutzschaltung wird nicht als zweckmäßig angesehen, da im Störfall der Strom im Lastkreis in einem viel geringeren Maße ansteigt als die Spannung, so daß es vorteilhaft ist, den gegenüber dem Stromanstieg im Störfall erheblich größeren Spannungsanstieg als Steuergröße heranzuziehen. Ferner erscheint es nicht zweckmäßig, im Störfall den Wechselrichter vollständig abzuschalten, da jeder Einschaltvorgang eine nicht unerhebliche, wenn auch kurzzeitige Belastung für die einzelnen Schaltglieder mit sich bringt, die im Hinblick auf die Lebensdauer dieser Schaltglieder besser zu vermeiden ist.

Die Erfindung zielt nun darauf ab, im Störfall als Steuergröße einerseits die rasch ansteigende Elektrodenspannung heranzuziehen und darüberhinaus die Schaltung so auszulegen, daß sie im Störfall stark gedämpft wird, so daß ein weiterer Spannungsanstieg unterbunden wird, ohne daß jedoch dabei die Schaltung vollständig außer Betrieb gesetzt wird, diese vielmehr nach Behebung der Störung aus dem gedämpften Zustand wiederum voll anschwingt und die notwendigen Betriebsgrößen wieder erreicht. Dies geschieht vorschlagsgemäß durch jene Merkmale, die Inhalt und Gegenstand des kennzeichnenden Teiles des Patentanspruches sind.

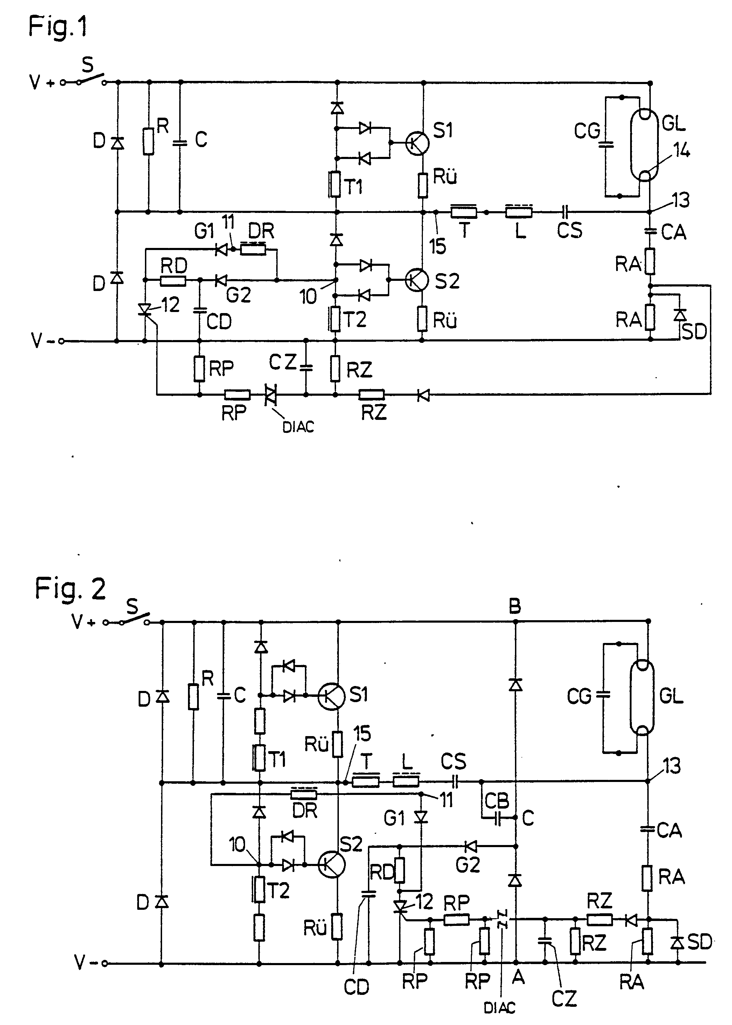

Die Fig. 1 bis 6 veranschaulichen verschiedene Schaltungsbeispiele, wobei alle funktionsgleichen Schaltglieder und Schaltelemente bei allen Ausführungsbeispielen mit denselben Hinweisgrößen bezeichnet worden sind.

Der Wechselrichter nach Fig. 1 hat im wesentlichen einen konventionellen Aufbau mit Eingangsschaltglieder D, R, C, wobei der Kondensator C als Speicherkondensator für die als Schalter dienenden Transistoren S1 und S2 dient. Parallel zum Transistor S1 liegt der Lastkreis mit einer Schwingkreisinduktivität L, einem Schwingkreiskondensator CS, der Primärwicklung T eines, mehrere Sekundärwicklungen T1 und T2 aufweisenden Steuertransformators und der Gasentladungslampe GL, deren Heizkreis über den Kondensator CG geschlossen ist. Die Sekundärwicklung T1 und T2 des Steuertransformators sind in den Steuerkreisen der Transistoren S1 und S2 angeordnet und sie haben die Aufgabe, abhängig vom Strom in der Primärwicklung T dieses Steuertransformators diese Transistoren S1 und S2 wechselweise durchzuschalten bzw. zu sperren. Überlastungswiderstände RÜ sind allen elektronischen Schaltern S1 und S2 zugeordnet. Der Wechselrichter ist beispielsweise auf eine Betriebsfrequenz von 20 kHz ausgelegt. Der Serienschwingkreis ist verlustarm dimensioniert, seine Resonanzfrequenz kann der Betriebsfrequenz des Wechselrichters entsprechen. Der Wechselrichter ist an den Phasen V+ und V− einer Gleichspannungsquelle angeschlossen und wird mittels des Schalters S zu- bzw. abgeschaltet. Soweit ist diese Schaltung Stand der Technik.

Um nun den eingangs erwähnten Effekt zu erzielen, nämlich die Betriebsfrequenz der Schaltung im Störfall zu dämpfen, ist nun eine Drossel DR mit ihrem einen Wicklungsende 10 am Steuerkreis des einen Transistors S2 angeschlossen. Das andere Wicklungsende 11 liegt über einem steuerbaren Thyristor 12 an der Phase V– mit dem niedrigeren Potential der den Wechselrichter speisenden Gleichspannungsquelle. Ein der Drossel DR nachgeschalteter Gleichrichter G1 schützt den Thyristor 2 vor Wechselspannung. Parallel zur Drossel DR ist ein Widerstand RD geschaltet, der die Aufgabe hat, die Drossel nicht unwirksam zu machen. Er bildet zusammen mit dem Kondensator CD ein Zeitverzögerungsglied, über welches der Haltestrom für den Thyristor 12 aufgebracht wird, wenn im Steuerkreis für den elektronischen Schalter S2 die Wechselspannung durch Null durchfährt. Der Gleichrichter G2 hat in diesem Kreis ebenfalls Schutzfunktion.

Am Anschlußpunkt 13 wird nun die Steuerspannung für den Thyristor 12 abgegriffen, wobei der Kondensator CA für die Gleichspannungstrennung sorgt und Widerstände RA in Verbindung mit einer Sperrdiode SD für die notwendige Spannungsteilung. Die Widerstände und Kondensatoren RZ und CZ dienen als Verzögerungsglieder. Das elektronische Schaltglied DIAC, ausgebildet als bipolarer Schalter, sperrt die Steuerspannung so lange, bis sie einen bestimmten maximalen Wert erreicht hat, worauf dieses Schaltglied erst spannungsdurchlässig wird. Die Widerstände RP dienen zur Anpassung und Spannungsteilung. Die Funktion der übrigen Schaltglieder, wie aus der Fig. 1 ersichtlich, die nicht näher bezeichnet sind, ergibt sich für den einschlägigen Fachmann unmittelbar aus der gezeigten Schaltung und braucht hier wohl nicht näher erörtert zu werden.

Wird nun der Schalter S geschlossen und damit der Wechselrichter an die Gleichspannungsquelle V+ – V– angeschlossen, so steigt die Spannung an den Elektroden der Gasentladungslampe GL rasch an, bis die Gasentladungslampe GL gezündet hat, worauf die Spannung auf ihren normalen Betriebswert abfällt, der erheblich unter jenem Wert liegt, bei welchem die Gasentladungslampe zündet. Dies unter der Voraussetzung, daß die Gasentladungslampe GL ordentlich funktioniert und keinen Defekt aufweist.

Wird nun jedoch vorausgesetzt, daß die Gasentladungslampe GL einen sogenannten Gasdefekt besitzt, so steigt die Spannung am Serienschwingkreis und damit an den Elektroden der Gasentladungslampe GL nach Schließen des Schalters sehr rasch an und erreicht, da die Gasentladungslampe wegen ihres Gasdefektes nicht starten kann, immer höhere Werte, die, sofern die Schaltung keine entsprechende Schutzeinrichtung besitzt, zur Zerstörung der Isolation führen kann.

Die im Falle des Defektes auf Grund des fast ungedämpften Serienschwingkreises rasch ansteigende Wechselspannung wird nun über den Kondensator CA und den Spannungsteiler RA abgegegriffen und zur Steuerelektrode des Thyristors 12 geleitet, wobei das Verzögerungsglied RZ — CZ für eine entsprechende zeitliche Verzögerung sorgt und der bipolare Schalter DIAC dafür, daß diese Steuerspannung erst dann wirksam wird, wenn sie einen bestimmten Maximalwert erreicht hat. Der vorerst gesperrte Thyristor 12 wird nun durchgeschaltet, so daß nun die Drossel DR stromdurchflossen ist, wodurch die Eigenfrequenz des Schwingkreises verstimmt und die Betriebsfrequenz dadurch erheblich gedämpft wird. Der Thyristor 12 bleibt nun so lange geschlossen, also leitfähig, solange der Haltestrom den für den Thyristor 12 charakteristischen Wert nicht unterschreitet. Dieser Haltestrom für den Thyristor 12 wird bei der Schaltung nach Fig. 1 dem Steuerkreis für den Schalter S2 entzogen, wobei der Widerstand RD in Verbindung mit dem Kondensator CD für die Aufrechterhaltung dieses Haltestromes sorgt. Diese Schaltung ist dann einsetzbar und anwendbar, wenn die elektronischen Schalter S1 bzw. S2 entsprechend hohe Steuerspannungen benötigen. Dieser gedämpfte Zustand der Schaltung wird so lange aufrechterhalten, bis die defekte Lampe aus der Fassung entnommen wird. Dadurch wird des Lastkreis unterbrochen, die Steuerspannung und der Haltestrom fallen ab und der Thyristor 12 öffnet wieder und schaltet somit die Drossel DR ab. Dies geschieht bei geschlossenem Schalter S. Wird nun anstelle der defekten Gasentladungslampe GL eine funktionstüchtige Gasentladungslampe eingesetzt, so ist der Lastkreis wieder geschlossen, der Wechselrichter nimmt seine Funktion auf und die Spannung im Lastkreis steigt rasch an, bis die Gasentladungslampe GL zündet. Sollte auch die eingesetzte Gasentladungslampe einen Defekt aufweisen, der die Zündung verhindert, so tritt jener Vorgang ein, der vorstehend beschrieben wurde.

Fig. 2 zeigt nun eine ähnliche Schaltung. Wechselrichter und Lastkreis sind in der gleichen Weise ausgebildet wie beim Ausführungsbeispiel nach Fig. 1. Der Unterschied bei der Schaltung nach Fig. 2 liegt im wesentlichen in jenen Schaltungsdetails, die zur Aufrechterhaltung des Haltestromes bei durchgeschaltetem Thyristor 12 dienen. Hier wird der Haltestrom dem die Phasen V+ und V– verbindenden Leitungszweig AB entnommen, in welchem die Spannung über den Begrenzungskondensator CB konstant gehalten wird.

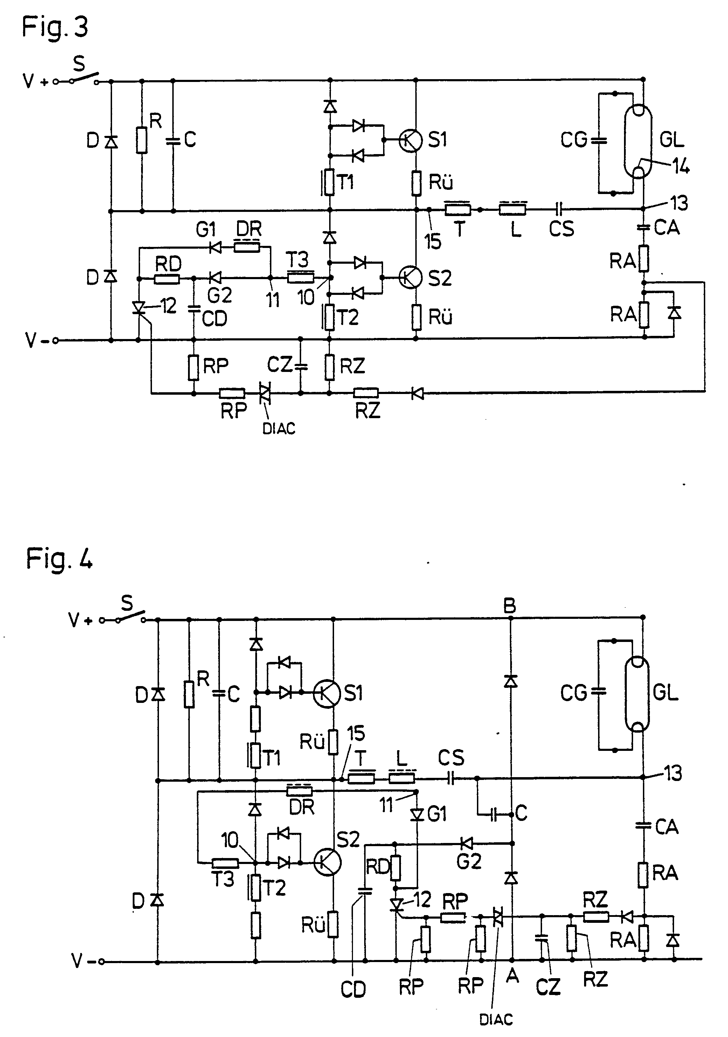

Die Schaltung nach Fig. 3 unterscheidet sich von jener nach Fig. 1 dadurch, daß der Steuertransformator außer den schon erwähnten Wicklungen T, T1 und T2 noch eine zusätzliche Sekundärwicklung T3 besitzt. Alle diese Wicklungen sind starr miteinander transformatorisch gekoppelt, indem alle Wicklungen auf einem gemeinsamen Kern angeordnet sind. Diese zusätzliche Sekundärwicklung T3 des Steuertransformators ist der Drossel DR vorgeschaltet, diese beiden Wicklungen liegen miteinander in Reihe, was dann zweckmäßig und erforderlich ist, wenn die Spannung im Steuerkreis des Schalters S2 am Anschlußpunkt 10 nicht hinreichend hoch ist, um den Haltestrom für den Thyristor 12 aufrechtzuerhalten. Die an der Sekundärwicklung T2 anliegende Spannung ist unter Umständen sehr klein, sie kann kleiner sein als die Durchlaßspannung für die Gleichrichter G1 bzw. G2. Werden jedoch elektronische Schalter S1 und S2 verwendet mit hohen Steuerspannungen, so kann auf diese zusätzliche Sekundärwicklung T3 des Steuertransformators verzichtet werden.

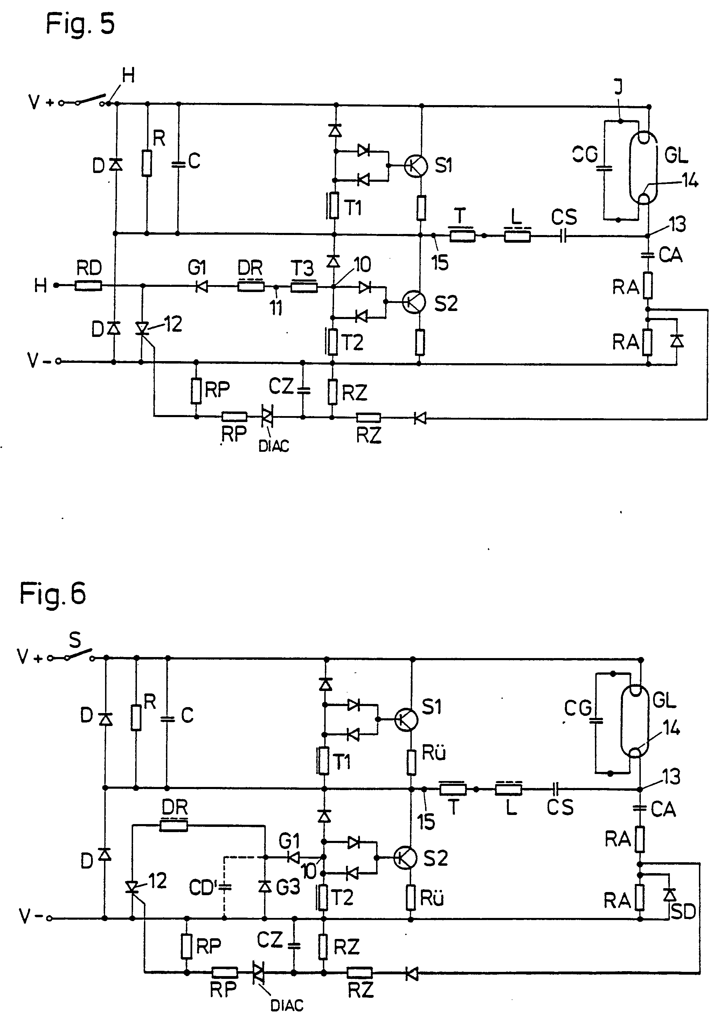

Eine solche zusätzliche Sekundärwicklung T3 kann auch bei einer Schaltung nach Fig. 2 eingesetzt werden. Dies zeigt nun Fig. 4. Die Schaltung ist um so stabiler, je höher der Haltestrom für den Thyristor 12 ist. Ausgehend von der Schaltung nach Fig. 1 ist nun in Fig. 5 gezeigt, daß der Haltestrom für den Thyristor 12 über den Widerstand RD auch direkt von der Phase V+ abgeleitet werden kann. Die Punkte H – H bezeichnen die Anschlußpunkte. Eine solche Schaltung ist jedoch mit ohmischen Verlusten verbunden, da während des Wechsels der Lampe GL der Haltestrom aufrechterhalten wird und dieser Haltestrom erst nach Öffnen des Schalters S unterbrochen wird. Eine Verbesserung wird jedoch gegenüber dieser Schaltung dadurch erzielt, daß der Widerstand RD am Anschlußpunkt I angeschlossen wird.

Die Schaltung nach Fig. 6 stellt eine vereinfachte Schaltung dar. In der positiven Halbwelle der Spannung an der Wicklung T2 (bzw. T2 und T3) fließt ein ausreichend hoher Haltestrom und bei kleinerwerdender positiver Halbwelle an T2 (bzw. T2 und T3) und in der negativen Phase dieses Zyklusses hält die gespeicherte Energie in der Drossel DR über die Sperrdiode G3 den Haltestrom für den Thyristor 12 aufrecht. Da der Haltestrom bei dieser Schaltung durch keine zusätzlichen, in Serie geschalteten Widerstände fließt ist der gewonnene Haltestrom höher als bei den oben beschriebenen Schaltungen, so daß für den Thyristor 12 ·ein relativ hoher Haltestrom zur Verfügung steht. Dank der Höhe des Haltestromes können Thyristoren mit geringer Empfindlichkeit eingesetzt werden, welche auf dem Markt billig, also mit wenigen Kosten zu erhalten sind.

Da die Schaltung im Störfall weiterschwingt, kann der Haltestrom von Wechselrichter selbst verlustarm erzeugt werden. Die Maßnahmen nach den Ansprüchen 2 und 3 geben an, woher die Energie für den Haltestrom bezogen werden kann. Die für die Erzeugung des Haltestromes notwendige Energie ist nach der Maßnahme nach Anspruch 2 klein, nach der Maßnahme nach Anspruch 3 relativ hoch und er kann im letzteren Fall bis einige Watt erreichen.

Der Gleichrichter G1 nach Anspruch 5 dient dazu, die Entladung des Kondensators CD über den Widerstand RD und über die Drossel DR während der negativen Spannungshalbwelle am Steuertransformator bzw. das Löschen des Thyristors 12 durch die negative Spannungshalbwelle zu verhindern. .

Der bipolare Schalter DIAC im Steuerkreis des Thyristors 12 hat eine definierte Durchbruchspannung. Im Störungsfalle muß sich die Spannung bis auf diese Triggerspannung steigern, dann erst wird der Thyristor 12 aktiviert.

Die starre transformatorische Kopplung aller Wicklungen des Steuertransformators (T — T1 — T2 — T3) bewirkt eine starre Abhängigkeit des Einschaltens der Transistoren vom Strom und eine steuerbare Leistungsaufnahme des Wechselrichters.

Dank der Maßnahmen nach Anspruch 9 und 10 lädt der Gleichrichter G2 bis zur Sättigung der Drossel DR bei der positiven Spannungshalbwelle des Transformators den Kondensator CD. Die Ladung des Kondensators wird über den Widerstand RD dem Thyristor 12 zur Aufbringung des Haltestromes bereitgestellt. Dadurch ist die im Widerstand RD auftretende Verlustleistung sehr gering, im Gegensatz zu den Verlusten bei bisher verwendeten Schaltungen. Ein weiterer Vorteil liegt darin, daß der Thyristor 12 nur für kleine Spannungen gebaut sein muß. Wenn vorstehend anhand der verschiedenen Ausführungsbeispiele als spannungsabhängiger Schalter ein Thyristor 12 erläutert worden ist, so sei erwähnt, daß dieser Thyristor auch ersetzt werden kann beispielsweise durch zwei kleine Signaltransistoren, die sehr billig auf dem Markt erhältlich sind.

Dank der im Anspruch 11 geschilderten Maßnahme kann durch geeignete Wahl der Induktivität der Drossel DR und der Drosselgeometrie erreicht werden, daß die Frequenz des Wechselrichters im Störungsfalle wesentlich geringer ansteigt als bei den vorgenannten Schaltungen. Weil die Impulsbreite sinkt, verringert dies die Verluste im Störungsfalle weiterhin.

## Patentansprüche

1. Wechselrichterschaltung zum Betrieb von Gasentladungslampen mit Hochfrequenz, mit einem Wechselrichter, der an einer zweiphasigen Gleichspannungsquelle angeschlossen ist und mindestens einen durch elektronische Schalter geschalteten Ausgang aufweist, an dessen mindestens ein aus Induktivitäten und Kapazitäten gebildeter Serienschwingkreis sowie ein mehrere Wicklungen aufweisender Transformator liegt, dessen Sekundärwicklungen im Steuerkreis der elektronischen Schalter des Wechselrichters angeordnet sind, und mit Anschlüssen für die Gasentladungslampe bzw. -Lampen, über welche diese in Betrieb der Wechselrichterschaltung in Reihe mit dem Schwingkreis gelegt und anderseitig mit einer den Wechselrichter speisenden Phase der Gleichspannungsquelle verbunden ist bzw. sind, dadurch gekennzeichnet, daß eine Drossel (DR) vorgesehen ist, die in Abhängigkeit von der Höhe der Spannung, die en dem am geschalteten Ausgang des Wechselrichters angeschlossenen Lastkreis ansteht zu mindestens einer Sekundärwicklung (T2) des Transformators über spannungsabhängige Schalter, vorzugsweise über einen Thyristor (12), parallel anschließbar ist.

2. Schutzschaltung nach Anspruch 1, dadurch gekennzeichnet, daß der Haltestrom für den durchgeschalteten Thyristor (12) dem Steuerkreis eines elektronischen Schalters (S2) entnommen ist.

3. Schutzschaltung nach Anspruch 1, dadurch gekennzeichnet, daß der Haltestrom für den durchgeschalteten Thyristor (12) einen den Wechselrichter speisenden Phase entnommen ist.

4. Schutzschaltung nach einem der Ansprüche 1 bis 3, dadurch gekennzeichnet, daß die Drossel (DR) mit einer Wicklung in Reihe liegt, die als zusätzliche Sekundärwicklung (T3) des Transformators ausgebildet ist und diese zusätzliche Sekundärwicklung (T3), wenn sie an die Phase (V–) mit dem niedrigeren Potential der den Wechselrichter speisenden Gleichspannung angeschlossen ist, parallel zu derjenigen Sekundärwicklung (T2) des Transformators liegt, die im selben Stromkreis desjenigen elektronischen Schalters (S2) angeordnet ist, an welchem die zusätzliche Sekundärwicklung (T3) angeschlossen ist.

5. Schutzschaltung nach einem der Ansprüche 1 bis 3, dadurch gekennzeichnet, daß in Fließrichtung des die Drossel (DR) durchsetzenden Stromes in Serie zur Drossel (DR) ein Gleichrichter (GI) angeordnet ist.

6. Schutzschaltung nach Anspruch 1, dadurch gekennzeichnet, daß die Steuerelektrode des Thyristors (12) über RC-Verzögerungsglieder (RZ — CZ) an diejenige Elektrode (14) der Gasentladungslampe (GL) angeschlossen ist, welche am geschalteten Ausgang (15) des Wechselrichters liegt.

7. Schutzschaltung nach Anspruch 1, dadurch gekennzeichnet, daß die Steuerelektrode des Thyristors (12) über einen bipolaren Schalter (DIAC) an die Elektrode (14) der Gasentladungslampe (GL) angeschlossen ist, welche erst bei Erreichen eines bestimmten Spannungswertes durchschaltet.

8. Schutzschaltung nach Anspruch 4, dadurch gekennzeichnet, daß alle Wicklungen (T1, T2, T3, T) des Transformators starr miteinander transformatorisch gekoppelt sind, indem alle Wicklungen auf einem gemeinsamen Kern angeordnet sind.

9. Schutzschaltung nach Anspruch 1, dadurch gekennzeichnet, daß parallel zur Drossel (DR) ein vom Haltestrom für den Thyristor (12) durchflossener Widerstand (RD) vorgesehen ist.

10. Schutzschaltung nach Anspruch 1, dadurch gekennzeichnet, daß dem vom Haltestrom für den Thyristor (12) durchflossenen Widerstand (RD) ein Ladekondensator (CD) mit einer Diode (G2) zugeordnet ist.

11. Schutzschaltung nach Anspruch 1 oder 2, dadurch gekennzeichnet, daß parallel zu der mit dem Thyristor (12) in Serie liegenden Drossel (DR) ein weiterer Gleichrichter (G3) und eventuell ein Kondensator (CD') vorgesehen sind (Fig. 6).

## Claims

1. An inverter circuit for the operation of gas-discharge lamps with high frequency, having an inverter which is connected to a two-phase d.c. voltage source and has at least one output switched by electronic switches, at which there is at least one series oscillation circuit formed from inductors and capacitors, and a transformer having several windings and whose secondary windings are arranged in the control circuit of the electronic switches of the inverter, and the inverter having connections for the gas-discharge lamp or lamps via which the latter is/are placed in series with the oscillation circuit in the operation of the inverter circuit and, otherwise, is/are connected with a phase of the d.c. voltage source which supplies the inverter, characterised by the provision of a throttle (DR) which, depending on the level of the voltage existing on the load circuit which is connected to the switched output of the inverter, can be connected parallel to at least one secondary winding (T2) of the transformer via voltage-dependent switches, preferably via a thyristor (12).

2. A protection circuit according to Claim 1, characterised in that the holding current for the switched-through thyristor (12) is taken from the control circuit of an electronic switch (S2).

3. A protection circuit according to Claim 1, characterised in that the holding current for the switched-through thyristor (12) is taken from a phase which supplies the inverter.

4. A protection circuit according to any one of Claims 1 to 3, characterised in that the throttle (DR) lies in series with a winding which is designed as an additional secondary winding (T3) of the transformer, and this additional secondary winding (T3), when it is connected to the phase (V—) with the lower potential of the d.c. voltage supplying the inverter, lies parallel to that secondary winding (T2) of the transformer which is arranged in the same circuit of that electronic switch (S2) to which the additional secondary winding (T3) is connected.

5. A protection circuit according to any one of Claims 1 to 3, characterised in that a rectifier (G1) is arranged in series with the throttle (DR) in the direction of flow of the current passing through the throttle (DR).

6. A protection circuit according to Claim 1, characterised in that the control electrode of the thyristor (12) is connected via RC delay members (RZ—CZ) to that electrode (14) of the gas-discharge lamp (GL) which lies at the switched output (15) of the inverter.

7. A protection circuit according to Claim 1, characterised in that the control electrode of the thyristor (12) is connected via a bipolar switch (DIAC) to the electrode (14) of the gas-discharge lamp (GL) which does not switch through until a certain voltage value has been reached.

8. A protection circuit according to Claim 4, characterised in that all the windings (T1, T2, T3, T) of the transformer are rigidly coupled together inductively in that all the windings are arranged on a common core.

9. A protection circuit according to Claim 1, characterised in that a resistor (RD), which is passed through by the holding current for the thyristor (12), is provided parallel to the throttle (DR).

10. A protection circuit according to Claim 1, characterised in that a charging capacitor (CD) with a diode (G2) is allotted to the resistor (RD) which is passed through by the holding current for the thyristor (12).

11. A protection circuit according to Claim 1 or 2, characterised in that a further rectifier (G3) and possibly a capacitor (CD') are provided (Fig. 6) parallel to the throttle (DR) which lies in series with the thyristor (12).

## Revendications

1. Circuit d'onduleur pour la commande en haute fréquence de lampes luminescentes à gaz, comportant un onduleur qui est raccordé à une source de tension continue à deux phases et qui comporte au moins une sortie commandée par des commutateurs électroniques, à laquelle sont connectés au moins un circuit oscillant série constitué par des inductances et des capacités ainsi qu'un transformateur comportant plusieurs enroulements dont les enroulements secondaires sont disposés dans le circuit de commande des commutateurs électroniques de l'onduleur, et des raccordements destinés à la ou les lampe(s) luminescente(s) à gaz, grâce auxquels, lors du fonctionnement du circuit d'onduleur, celle(s)-ci est (sont) mise(s) en série avec le circuit oscillant et est (sont), d'autre part, reliée(s) à une phase de la source de tension continue, qui alimente l'onduleur, caractérisé en ce qu'une bobine de self (DR) est prévue qui est raccordable parallèlement à au moins un enroulement secondaire (T2) du transformateur via des commutateurs actionnés en tension, de préférence via un thyristor (12), en fonction du niveau de la tension qui se présente au circuit de charge connecté à la sortie commandée de l'onduleur.

2. Circuit de protection selon la revendication 1 caractérisé en ce que le courant de maintien du thyristor en état passant (12) provient du circuit de commande d'un commutateur électronique (S2).

3. Circuit de protection selon la revendication 1 caractérisé en ce que le courant de maintien du thyristor en état passant (12) provient d'une phase alimentant l'onduleur.

4. Circuit de protection selon l'une quelconque des revendications 1 à 3 caractérisé en ce que la bobine de self (DR) est disposée en série avec un enroulement qui constitue un enroulement secondaire supplémentaire (T3) du transformateur et en ce que, lorsque cet enroulement secondaire supplémentaire est connecté à la phase (V—) de potentiel le plus bas de la tension continue alimentant l'onduleur, ledit enroulement secondaire supplémentaire (T3) est en parallèle à l'enroulement secondaire (T2) du transformateur, qui est agencé dans le même circuit du commutateur électronique (S2) auquel est connecté l'enroulement secondaire supplémentaire (T3).

5. Circuit de protection selon l'une quelconque des revendications 1 à 3 caractérisé en ce qu'un redresseur (G1) est agencé en série avec la bobine de self (DR), dans le sens de circulation du courant traversant celle-ci (DR).

6. Circuit de protection selon la revendication 1 caractérisé en ce que l'électrode de commande du thyristor (12) est connectée via des éléments de retard — RC (RZ — CZ) à l'électrode (14) de la lampe luminescente à gaz (GL), qui est connectée à la sortie commandée (15) de l'onduleur.

7. Circuit de protection selon la revendication 1 caractérisé en ce que l'électrode de commande du thyristor (12) est connectée via un commutateur bipolaire (DIAC) à l'électrode (14) de la lampe luminescente à gaz (GL), qui ne devient conductrice que lorsqu'un seuil de tension déterminé est atteint.

8. Circuit de protection selon la revendication 4 caractérisé en ce que tous les enroulements (T1, T2, T3, T) du transformateur sont connectés rigidement entre eux de manière à former un transformateur, par agencement de tous sur un noyau commun.

9. Circuit de protection selon la revendication 1 caractérisé en ce qu'une résistance (RD) traversée par le courant de maintien du thyristor (12) est prévue en parallèle sur la bobine de self (DR).

10. Circuit de protection selon la revendication 1 caractérisé en ce qu'un condensateur de lissage (CD) et une diode (G2) sont associés à la résistance (RD) parcourue par le courant de maintien du thyristor (12).

11. Circuit de protection selon la revendication 1 ou 2 caractérisé en ce qu'un autre redresseur (G3) et éventuellement un condensateur (CD) sont prévus parallèlement à la bobine de self (DR) en série avec le thyristor (12) (figure 6).

EP 0 221 972 B1

Fig.1

Fig. 2

1

Fig. 3

Fig. 4

## Fig. 5

## Fig. 6